# FASCICULE DE BREVET EUROPEEN

(11) **EP 3 967 478 B1**
(45) Date de publication et mention de la délivrance du brevet: **08.10.2025**
(21) Numéro de dépôt: 21196020.8
(22) Date de dépôt: 10.09.2021
(51) Int. Cl.: B29C 70/08, B29C 43/18, B29C 43/20, B29C 70/20, B29C 70/30, B29C 70/46, B29D 24/00, B29D 99/00, B29C 43/52, B32B 1/00, B32B 3/12, B32B 5/02, B32B 5/08, B32B 5/12, B32B 5/26, B32B 7/12, B32B 27/12, B32B 27/32, B32B 37/12, B32B 37/14, B29L 31/60

(54) **PROCÉDÉ DE FABRICATION D'UNE PIÈCE D'ÉQUIPEMENT DE VÉHICULE AUTOMOBILE ET PIÈCE D'ÉQUIPEMENT ASSOCIÉE**
VERFAHREN ZUR HERSTELLUN EINES AUSRÜSTUNGSTEILS EINES KRAFTFAHRZEUGS UND ENTSPRECHENDES AUSRÜSTUNGSTEIL
METHOD FOR MANUFACTURING AN EQUIPMENT PART FOR A MOTOR VEHICLE AND ASSOCIATED EQUIPMENT PART

(30) Priorité: 10.09.2020 FR 2009155
(43) Date de publication de la demande: 16.03.2022
(73) Titulaire: Adler Pelzer France Grand-Est, 08210 Mouzon (FR)
(72) Inventeur: JEUNESSE, Steeve, 08210 MOUZON (FR)
(74) Mandataire: Lavoix

(56) Documents cités:
- US-A1- 2010 239 856
- US-A1- 2015 056 430
- US-A1- 2020 230 897

## Description

La présente invention concerne un procédé de fabrication d'une pièce d'équipement de véhicule automobile, comprenant les étapes suivantes : formation d'un empilement comprenant : une première et une deuxième nappes de base ; et un écarteur disposé entre lesdites première et deuxième nappes de base ; au moins la première nappe de base comportant des premières fibres céramiques et au moins un premier polymère thermofusible ; ladite première nappe de base présentant de préférence une masse surfacique comprise entre 600 g/m² et 1000 g/m² ; chauffage et compression de l'empilement de sorte à faire fondre le premier polymère thermofusible.

Il est connu de réaliser des pièces d'équipement de véhicule automobile, telles des tablettes de coffre, à base de matériau composite constitué de fibres structurelles en céramique, généralement en verre, et d'une matrice thermoplastique.

Ce matériau composite est obtenu en thermoformant c'est-à-dire en chauffant puis comprimant, une nappe textile constituée d'un mélange intime de fibres structurelles et de fibres à base d'un polymère thermoplastique. Une telle nappe textile est par exemple commercialisée sous la dénomination Sommold.

Après chauffage, les fibres thermoplastiques fusionnent, conduisant à un élément composite pré-formé ; lequel élément est transporté jusqu'à un moule de formage. Le moule est refermé, permettant le refroidissement du polymère qui constituera la matrice du composite.

Afin de diminuer le poids de la pièce d'équipement, il est connu d'empiler deux nappes textiles de part et d'autre d'un écarteur en matériau léger, de type nid d'abeille en carton. Une telle pièce d'équipement et son procédé de fabrication sont notamment connus du document WO2013/131917.

Cependant, lorsque la nappe textile est directement au contact de l'écarteur, un affaissement de ladite nappe textile se produit au niveau des alvéoles du nid d'abeilles lors de la compression. Ce phénomène, dit de festonnage, empêche de comprimer suffisamment la nappe textile pour conférer une résistance mécanique suffisante à la pièce d'équipement.

Il est par ailleurs connu, notamment du document FR3014731, de réaliser des pièces d'équipement de véhicule automobile comprenant des fibres longues, par exemple en verre. Cependant, ces fibres sont peu mobiles les unes par rapport aux autres, ce qui provoque un écrasement des bords de la pièce, d'où un aspect non satisfaisant. US2020230897A1 décrit un procédé de fabrication d'une pièce d'équipement de véhicule automobile. Le procédé comprend la formation d'un empilement comprenant une première et une deuxième nappes de base et un écarteur disposé entre lesdites première et deuxième nappes de base. La première nappe de base comporte des fibres céramiques. De plus, la première nappe de base comporte un premier polymère thermofusible.

En outre, l'adhésion entre les peaux composites et l'écarteur est fréquemment insuffisante.

La présente invention a pour but de proposer une pièce d'équipement s'affranchissant des problèmes ci-dessus, pour un coût de réalisation modéré.

A cet effet, l'invention a pour objet un procédé de fabrication d'une pièce d'équipement de véhicule automobile tel que défini dans la revendication 1.

Suivant d'autres aspects avantageux de l'invention, le procédé de fabrication comporte l'une ou plusieurs des caractéristiques suivantes, prises isolément ou suivant toutes les combinaisons techniquement possibles :
- les deuxièmes fibres unidirectionnelles sont choisies entre des fibres céramiques, telles que des fibres de verre, et des fibres naturelles telles que des fibres de lin ;
- la deuxième nappe de base comporte des troisièmes fibres céramiques et au moins un troisième polymère thermofusible ; ladite deuxième nappe de base présentant de préférence une masse surfacique comprise entre 600 g/m² et 1000 g/m² ;
- l'empilement comporte en outre une deuxième nappe de renfort, disposée entre la deuxième nappe de base et l'écarteur, ladite deuxième nappe de renfort comprenant des quatrièmes fibres unidirectionnelles sensiblement parallèles entre elles et au moins un quatrième polymère thermofusible ; ladite deuxième nappe de renfort présentant de préférence une masse surfacique comprise entre 200 g/m² et 500 g/m² ;
- l'empilement comporte en outre au moins une première couche de matériau non-tissé disposée entre la première nappe de renfort et l'écarteur, ladite première couche étant formée au moins d'un cinquième polymère thermofusible ;
- le cinquième polymère thermofusible présente un indice de fluidité à chaud élevé, préférentiellement supérieur à 25 g/10 mn, plus préférentiellement compris entre 25 et 35 g/10 mn ;
- l'étape de chauffage et compression de l'empilement comprend les deux sousétapes suivantes : chauffage et première compression de l'empilement contre un support, de sorte à faire fondre au moins le premier polymère thermofusible et à faire adhérer ledit polymère fondu aux premières fibres céramiques pour conduire à un élément composite pré-formé ; puis deuxième compression, dans un moule, de l'élément composite pré-formé.

L'invention se rapporte en outre à une pièce d'équipement de véhicule automobile issue d'un procédé de fabrication tel que décrit ci-dessus, comprenant un premier et un deuxième corps composites ; et un écarteur pris en sandwich entre les premier et deuxième corps composites ; ledit premier corps composite comprenant : une première couche composite principale ; et une première couche composite de renfort, disposée entre la couche composite principale et l'écarteur ; la première couche composite principale comportant une pluralité de premières fibres céramiques et la première couche composite de renfort comportant une pluralité de deuxièmes fibres unidirectionnelles.

Selon un mode de réalisation de l'invention, chacun des premier et deuxième polymères thermofusibles est un polymère thermoplastique, préférentiellement un polypropylène.

Selon un mode de réalisation de l'invention, le troisième polymère thermofusible est préférentiellement un polymère thermoplastique, plus préférentiellement un polypropylène.

L'invention sera mieux comprise à la lecture de la description qui va suivre, donnée uniquement à titre d'exemple non limitatif et faite en se référant aux dessins sur lesquels :
- [Fig 1] la figure 1 est une vue de détail, en coupe, d'une pièce d'équipement selon un mode de réalisation de l'invention ;
- [Fig 2] la figure 2 est une vue schématique d'une première étape de fabrication de la pièce d'équipement de la figure 1 ; et
- [Fig 3] la figure 3 est une vue schématique d'une deuxième étape de fabrication de la pièce d'équipement de la figure 1.

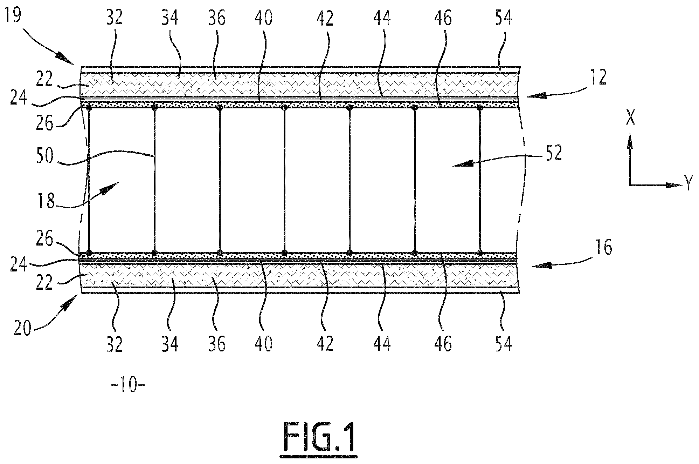

La figure 1 représente une pièce 10 d'équipement de véhicule automobile selon un mode de réalisation de l'invention. La pièce 10 est avantageusement une pièce structurante du véhicule automobile, par exemple une tablette, telle qu'une tablette arrière de masquage de coffre, un faux plancher d'habitacle ou de coffre, ou un sousmoteur.

La pièce 10 comporte un premier corps composite 12, un deuxième corps composite 16 et un écarteur 18, pris en sandwich entre les premier 12 et deuxième 16 corps composites. De préférence, la pièce 10 comporte en outre au moins une première couche de parement 19 appliquée sur l'un des corps composites 12, 16. Dans le mode de réalisation représenté, la pièce 10 comporte une première 19 et une deuxième 20 couches de parement, respectivement appliquées sur le premier 12 et sur le deuxième 16 corps composites. Lesdites couches de parement 19, 20 forment une surface extérieure de la pièce 10.

Les éléments précédemment mentionnés sont superposés selon une direction d'empilement X.

Dans le mode de réalisation représenté, les premier 12 et deuxième 16 corps composites sont sensiblement identiques et seront décrits simultanément ci-après.

Le corps composite 12, 16 comporte : une couche composite 22 principale ; et une couche composite 24 de renfort, disposée entre la couche composite 22 principale et l'écarteur 18. De préférence, comme dans le mode de réalisation représenté, le corps composite 12, 16 comporte en outre une couche adhésive 26, disposée entre la couche composite 24 de renfort et l'écarteur 18.

La couche composite 22 principale comporte une pluralité de premières fibres 32 céramiques et une première matrice 34 liant les premières fibres 32 entre elles.

Les premières fibres 32 sont préférentiellement des fibres de verre. Lesdites premières fibres 32 sont des fibres courtes, présentant une longueur moyenne inférieure à 150 mm. Les premières fibres 32 présentent par exemple un diamètre inférieur à 50 micromètres.

La première matrice 34 comporte au moins un premier polymère 36 thermofusible. Avantageusement, ledit premier polymère 36 thermofusible est un polymère thermoplastique, préférentiellement un polypropylène.

La proportion massique de première matrice 34 dans la couche composite 22 principale est comprise entre 30% et 70% par rapport à la masse totale de ladite couche composite 22. De même, la proportion massique des premières fibres 32 dans la couche composite 22 principale est comprise entre 30% et 70% par rapport à la masse totale de ladite couche composite 22. De préférence, chacune des proportions massiques de premières fibres 32 et de première matrice 34 est d'environ 50%.

La couche composite 24 de renfort comporte une pluralité de deuxièmes fibres 40 unidirectionnelles et une deuxième matrice 42 liant les deuxièmes fibres 40 entre elles.

Les deuxièmes fibres 40 sont de préférence choisies entre des fibres céramiques, telles que des fibres ou filaments de verre, et des fibres naturelles telles que des fibres de lin.

Lesdites deuxièmes fibres 40 sont des fibres longues, présentant une longueur moyenne supérieure à la longueur moyenne des premières fibres 32 céramiques. Lesdites deuxièmes fibres 40 présentent par exemple une longueur moyenne supérieure à 80 cm lorsqu'il s'agit de fibres naturelles. Dans le cas des filaments de verre, leur longueur correspond par exemple à une largeur de la pièce 10.

Les deuxièmes fibres 40 présentent par exemple un diamètre de 20 micromètres.

Les deuxièmes fibres 40 unidirectionnelles sont sensiblement parallèles entre elles et disposées dans une direction Y sensiblement perpendiculaire à la direction d'empilement X.

Dans le mode de réalisation représenté, la direction Y des deuxièmes fibres 40 est identique pour les premier 12 et deuxième 16 corps composites. En variante, les directions des deuxièmes fibres 40 des premier 12 et deuxième 16 corps composites forment un angle non nul dans un plan perpendiculaire à X.

La deuxième matrice 42 comporte au moins un deuxième polymère 44 thermofusible. Avantageusement, ledit deuxième polymère 44 est un polymère thermoplastique, préférentiellement un polypropylène. De préférence, les premier 36 et deuxième 44 polymères sont identiques.

La proportion massique de deuxième matrice 42 dans la couche composite 24 de renfort est comprise entre 50% et 70% par rapport à la masse totale de ladite couche composite 24. De même, la proportion massique des deuxièmes fibres 40 dans la couche composite 24 de renfort est comprise entre 50% et 70% par rapport à la masse totale de ladite couche composite 24.

La couche adhésive 26 est formée d'au moins un troisième polymère 46 thermofusible. Avantageusement, ledit troisième polymère 46 est un polymère thermoplastique, préférentiellement un polypropylène.

De préférence, le troisième polymère 46 thermofusible présente un indice de fluidité à chaud élevé. L'indice de fluidité à chaud (IFC), ou indice de fluage, ou en anglais *melt flow index* ou MFI, caractérise la capacité d'un polymère à s'écouler sous certaines conditions de températures et de pression. En particulier, l'IFC est inversement relié à la masse molaire du polymère.

De préférence, l'IFC du troisième polymère 46 thermofusible est supérieur aux IFC des premier 36 et deuxième 44 polymères. De préférence, l'IFC du troisième polymère 46 thermofusible est supérieur à 25 g/10 mn plus préférentiellement compris entre 25 et 35 g/10 mn. De telles valeurs de l'IFC du troisième polymère 46 thermofusible correspondent notamment à une température de 220°C avec une charge nominale de 0,325kg, conformément à la Norme ISO 1133 :2005 Méthode A.

Avantageusement, comme il sera précisé par la suite, le troisième polymère 46 thermofusible de la couche adhésive 26 est partiellement imprégné dans l'écarteur 18.

En variante à la description ci-dessus, les couches composites 22 principales des premier 12 et deuxième 16 corps composites comprennent des premières fibres 32 et/ou des premiers polymères 36 différents ; et/ou les couches composites 24 de renfort des premier 12 et deuxième 16 corps composites comprennent des deuxièmes fibres 40 et/ou des deuxièmes polymères 44 différents ; et/ou les couches adhésives 26 des premier 12 et deuxième 16 corps composites comprennent des troisièmes polymères 46 différents.

L'écarteur 18 est disposé entre les premier 12 et deuxième 16 corps composites. Dans l'exemple représenté, l'écarteur est au contact de chaque couche adhésive 26. En variante non représentée, l'écarteur est au contact d'au moins une couche composite 24 de renfort.

L'écarteur 18 est avantageusement formé d'un matériau léger, tel que du papier ou du carton.

Préférentiellement, l'écarteur 18 présente une structure alvéolaire ou en nid d'abeille. Dans le mode de réalisation représenté, l'écarteur 18 présente une pluralité de parois 50 sensiblement parallèles à la direction d'empilement X. Les parois 50 délimitent des espaces centraux 52 de contour fermé, formant des alvéoles.

La couche de parement 19, 20 comporte de préférence une couche 54 de textile non-tissé, au contact de la couche composite 22 principale. Ladite couche 54 est par exemple réalisée en polyéthylène téréphtalate (PET) et forme de préférence la surface extérieure de la pièce 10.

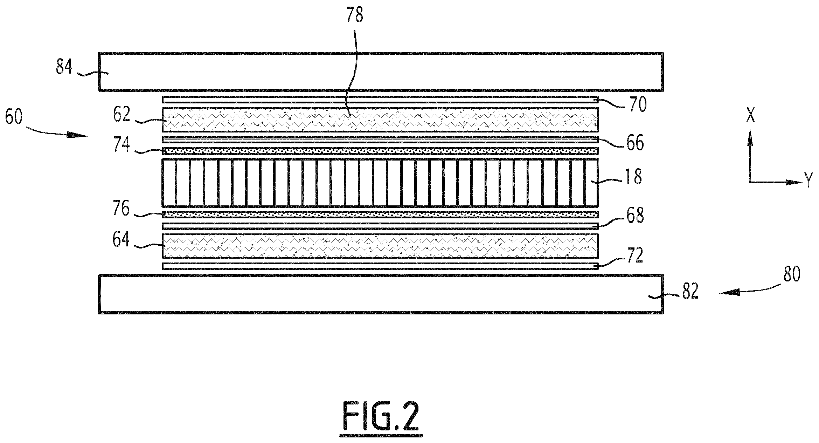

La figure 2 montre une première étape d'un procédé de fabrication de la pièce d'équipement 10. La figure 2 montre notamment un empilement 60 comprenant : une première 62 et une deuxième 64 nappes de base ; un écarteur 18 ; une première 66 et une deuxième 68 nappes de renfort ; et une première 70 et une deuxième 72 nappes de parement. Lesdits éléments sont empilés selon la direction d'empilement X, comme il sera précisé ci-après.

Dans le mode de réalisation représenté, l'empilement 60 comprend en outre une première 74 et une deuxième 76 nappes d'adhésion.

Chaque nappe de base 62, 64 comprend un mélange de premières fibres 32 céramiques précédemment décrites et de fibres 78 de polymère thermofusible.

Les fibres 78 comprennent au moins le premier polymère 36 thermofusible précédemment décrit. Selon un mode de réalisation, toutes les fibres 78 sont constituées d'un même premier polymère 36 thermofusible. En variante, les fibres 78 incluent des fibres formées d'un autre polymère thermofusible.

Selon un mode de réalisation, les fibres 78 comprennent du premier polymère 36 recyclé, notamment du polypropylène recyclé, ce qui diminue le coût de fabrication de la pièce 10.

La proportion massique des premières fibres 32 céramiques dans la nappe de base 62, 64 est comprise entre 30% et 70%, et de préférence proche de 50%, par rapport à la masse totale de ladite nappe de base.

Chaque nappe de base 62, 64 présente de préférence une masse surfacique comprise entre 600 g/m² et 1000 g/m².

Chaque nappe de base 62, 64 présente de préférence une épaisseur selon la direction X comprise entre 6 et 10 mm.

De manière connue, la nappe de base 62, 64 est par exemple réalisée selon un procédé par dispersion à l'air, ou encore par cardage/nappage. La réalisation de ladite nappe de base comporte de préférence une étape de renforcement par aiguilletage.

Des nappes de base 62, 64 appropriées sont par exemple des nappes commercialisées sous la dénomination Sommold.

L'écarteur 18, décrit-ci-dessus dans le cadre de la pièce 10, est disposé entre les première 62 et deuxième 64 nappes de base dans l'empilement 60.

Chacune des première 66 et deuxième 68 nappes de renfort est disposée, dans l'empilement 60, entre l'écarteur 18 et respectivement la première 62 et la deuxième 64 nappe de base.

Chaque nappe 66, 68 de renfort comprend des deuxièmes fibres 40 unidirectionnelles, disposées sensiblement parallèles entre elles, lesdites deuxièmes fibres 40 étant liées par une matrice comprenant le deuxième polymère 44 thermoplastique, de préférence du polypropylène.

Chaque nappe 66, 68 de renfort présente de préférence une masse surfacique comprise entre 200 g/m² et 500 g/m².

Chacune des première 70 et deuxième 72 nappes de parement est disposée à l'opposé de l'écarteur 18, par rapport respectivement à la première 62 et à la deuxième 64 nappe de base. Chacune desdites nappes de parement est formée d'un matériau poreux, par exemple d'un textile de type Dilour^{®} ou jersey, ou encore d'un non-tissé en PET.

Chacune des première 74 et deuxième 76 nappes d'adhésion est disposée entre l'écarteur 18 et respectivement la première 66 et la deuxième 68 nappe de renfort. Chacune desdites nappes d'adhésion 74, 76 est par exemple formée d'un non-tissé comprenant le troisième polymère 46 thermofusible décrit ci-dessus.

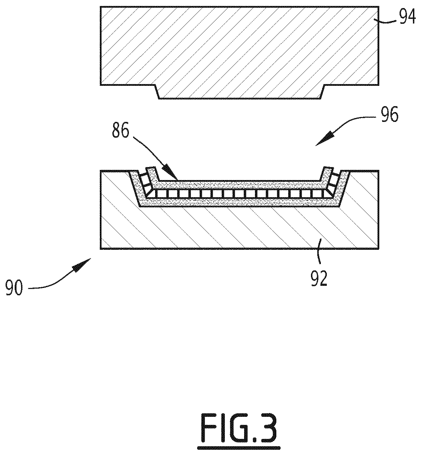

La figure 2 montre en outre une unité de pré-formage 80. Ladite unité de pré-formage comporte un premier 82 et un deuxième 84 plateaux chauffants. Lesdits plateaux sont mobiles l'un par rapport à l'autre selon la direction d'empilement X en considérant que l'empilement 60 est disposé sur le premier plateau chauffant 82. Les plateaux chauffants 82, 84 sont aptes à exercer une compression à chaud sur l'empilement 60, de sorte à conduire à un élément composite pré-formé 86 (figure 3) comme il sera décrit ci-après.

La figure 3 montre une deuxième étape du procédé de fabrication de la pièce d'équipement 10.

La figure 3 montre notamment une unité de moulage 90, comprenant un moule 92 et un contre-moule 94, mobiles l'un par rapport à l'autre et aptes à délimiter entre eux une cavité de moulage 96. Ladite cavité de moulage 96 présente la forme recherchée pour la pièce 10.

De manière optionnelle, l'unité de moulage 90 comporte en outre des moyens de régulation de la température du moule 92 et du contre-moule 94.

Un procédé de fabrication de la pièce d'équipement 10 va maintenant être décrit.

L'empilement 60 est tout d'abord réalisé en empilant comme décrit ci-dessus les nappes de base 62, 64 ; les nappes de renfort 66, 68 ; l'écarteur 18 ; les nappes de parement 70, 72 ; et les nappes d'adhésion 74, 76. Lesdits éléments sont préalablement découpés selon les contours souhaités pour la pièce d'équipement 10.

De préférence, chaque couche de l'empilement 60 présente une direction préférentielle de résistance mécanique. Pour les nappes de renfort 66, 68, il s'agit de la direction Y des deuxièmes fibres 40 unidirectionnelles. Une direction mécanique privilégiée des nappes de base 62, 64 correspond par exemple à l'orientation des premières fibres 32 lors d'une étape de fabrication desdites nappes de base par cardage / nappage. L'écarteur 18 présente de préférence une direction mécanique privilégiée due à son mode de fabrication, à savoir la direction perpendiculaire à son étirage.

De ce fait, selon le cahier des charges, il est possible de combiner ces différentes orientations de façon à soit renforcer la pièce 10 finale dans une seule direction privilégiée, soit au contraire « moyenner » le comportement mécanique global de ladite pièce 10 en répartissant dans l'espace les différentes directions préférentielles de résistance mécanique.

L'empilement 60 ainsi formé est ensuite disposé dans l'unité de pré-formage 80, notamment sur le premier plateau 82 à température ambiante.

Les premier 82 et deuxième 84 plateaux sont ensuite chauffés et rapprochés l'un de l'autre, de sorte à comprimer à chaud l'empilement 60.

En particulier, l'empilement 60 est chauffé jusqu'à une température supérieure à la température de fusion du premier polymère 36 thermofusible. Cette température est par exemple supérieure à 180°C, et notamment d'environ 220°C.

De préférence, le chauffage est mis en oeuvre pendant une durée supérieure à 30 secondes, et notamment comprise entre 60 secondes et 150 secondes, en fonction de l'épaisseur de l'écarteur 18.

Ainsi, les fibres 78 des nappes de base 62, 64 fondent, pour former une résine fluide de premier polymère 36 thermofusible, dans laquelle sont noyées les premières fibres 32 céramiques.

De même, le deuxième polymère 44 thermofusible des nappes 66, 68 de renfort et le troisième polymère 46 thermofusible des nappes d'adhésion 74, 76 fondent au moins partiellement. En particulier, lesdites nappes d'adhésion 74, 76 épousent la forme des alvéoles 52 de l'écarteur 18 (phénomène de festonnage), ce qui permet une bonne imprégnation des parois 50 desdites alvéoles par le troisième polymère 46.

En parallèle, les premier 82 et deuxième 84 plateaux exercent une compression sur l'empilement 60, la pression exercée étant par exemple de l'ordre de 6 bars. Une telle compression conduit notamment à une diminution de l'épaisseur des nappes de base 62, 64.

En raison de la longueur des deuxièmes fibres 40 unidirectionnelles, chaque nappe 66, 68 de renfort assure une surface de contact plane, respectivement à la première 62 et à la deuxième 64 nappe de base. Chaque nappe de base 62, 64 est notamment isolée de l'écarteur 18, ce qui supprime les phénomènes de festonnage des nappes de base. En d'autres termes, la présence de la nappe 66, 68 de renfort sert de référence plane pour une meilleure compression de la nappe 62, 64 de base conduisant à un meilleur effet composite.

Ainsi, les couches composites 22 principales peuvent être suffisamment comprimées lors de l'étape de compression à chaud. En outre, les premières fibres 32 se retrouvent orientées dans un plan perpendiculaire à la direction X, pour une meilleure résistance mécanique de la pièce 10.

En parallèle, durant la compression de l'empilement 60, la résine fluide de premier polymère 36 thermofusible imprègne partiellement chacune des première 70 et deuxième 72 nappes de parement.

Cette première étape de compression à chaud permet ainsi de relier toutes les couches de l'empilement 60, conduisant à un élément composite pré-formé 86. Le terme « pré-formé » est utilisé car les ou certains polymères, encore à l'état fluide, ne constituent pas encore la matrice d'un corps composite.

Après cette première étape de compression à chaud, les premier 82 et deuxième 84 plateaux sont écartés l'un de l'autre. L'élément composite pré-formé 86 obtenu est manipulable, car les nappes de parement 70, 72 forment une surface externe dudit élément composite pré-formé, confinant les polymères fluides dans un espace fermé. Ledit élément composite pré-formé 86 peut ainsi être extrait de l'unité de pré-formage 80.

Dans une étape suivante du procédé de fabrication de la pièce d'équipement 10, l'élément composite pré-formé 86 est placé dans la cavité de moulage 96 de l'unité de moulage 90 de la figure 3.

Le moule 92 et le contre-moule 94 sont ensuite rapprochés l'un de l'autre de sorte à comprimer ledit élément composite pré-formé 86.

Durant la compression, la cavité de moulage 96 conforme ledit élément composite pré-formé 86 à la forme souhaitée de la pièce 10.

La faible longueur des premières fibres 32 donne une excellente déformabilité aux nappes de base 62, 64. Cette déformabilité, ainsi que l'épaisseur desdites nappes de base 62, 64, permettent auxdites nappes de draper efficacement les bords de l'écarteur 18 sans écrasement desdits bords, pour former un contour net à la pièce 10.

Selon un mode de réalisation, la température du moule 92 et du contre-moule 94 est contrôlée durant cette deuxième étape de compression pour rester proche de 15°C environ.

Le moule 92 et le contre-moule 94 sont maintenus proches l'un de l'autre jusqu'à refroidissement et durcissement des premier 36, deuxième 44 et troisième 46 polymères. Le moule 92 et le contre-moule 94 sont ensuite écartés l'un de l'autre, révélant la pièce 10 précédemment décrite.

Outre les avantages décrits ci-dessus lors de l'étape de compression, la présence des couches composites 24 de renfort confère une meilleure résistance mécanique à la pièce 10.

La présence éventuelle des couches adhésives 26 permet d'améliorer l'adhésion entre l'écarteur 18 et la couche composite 12, 16.

## Revendications

1. Procédé de fabrication d'une pièce (10) d'équipement de véhicule automobile, comprenant les étapes suivantes :
- formation d'un empilement (60) comprenant : une première (62) et une deuxième (64) nappes de base ; et un écarteur (18) disposé entre lesdites première et deuxième nappes de base ;
au moins la première nappe de base comportant des premières fibres (32) céramiques et au moins un premier polymère (36) thermofusible ; les premières fibres (32) présentant une longueur moyenne inférieure à 150 mm ;
- chauffage et compression de l'empilement (60) de sorte à faire fondre le premier polymère (36) thermofusible ;
dans lequel l'empilement comporte en outre une première nappe (66) de renfort, disposée entre la première nappe de base (62) et l'écarteur (18), ladite première nappe de renfort comprenant des deuxièmes fibres (40) unidirectionnelles, sensiblement parallèles entre elles, et au moins un deuxième polymère (44) thermofusible ; lesdites deuxièmes fibres (40) présentant une longueur moyenne supérieure à la longueur moyenne des premières fibres (32) céramiques ; ladite première nappe de renfort présentant une masse surfacique comprise entre 200 g/m² et 500 g/m².

2. Procédé de fabrication selon la revendication 1, dans lequel la première nappe de base présente une masse surfacique comprise entre 600 g/m² et 1000 g/m².

3. Procédé de fabrication selon la revendication 1 ou 2, dans lequel les deuxièmes fibres (40) unidirectionnelles sont choisies entre des fibres céramiques, telles que des fibres de verre, et des fibres naturelles telles que des fibres de lin.

4. Procédé de fabrication selon l'une des revendications précédentes, dans lequel la deuxième nappe de base (64) comporte des troisièmes fibres céramiques (32) et au moins un troisième polymère (36) thermofusible ; ladite deuxième nappe de base présentant de préférence une masse surfacique comprise entre 600 g/m² et 1000 g/m².

5. Procédé de fabrication selon l'une des revendications précédentes, dans lequel l'empilement comporte en outre une deuxième nappe (68) de renfort, disposée entre la deuxième nappe de base (64) et l'écarteur (18), ladite deuxième nappe de renfort comprenant des quatrièmes fibres (40) unidirectionnelles sensiblement parallèles entre elles et au moins un quatrième polymère (44) thermofusible ; ladite deuxième nappe de renfort présentant une masse surfacique comprise entre 200 g/m² et 500 g/m².

6. Procédé de fabrication selon l'une des revendications précédentes, dans lequel l'empilement comporte en outre au moins une première couche (74) de matériau non-tissé disposée entre la première nappe (66) de renfort et l'écarteur, ladite première couche étant formée au moins d'un cinquième polymère (46) thermofusible.

7. Procédé de fabrication selon l'une des revendications précédentes, dans lequel l'étape de chauffage et compression de l'empilement comprend les deux sousétapes suivantes :
- chauffage et première compression de l'empilement (60) contre un support (82, 84), de sorte à faire fondre au moins le premier polymère (36) thermofusible et à faire adhérer ledit polymère fondu aux premières fibres (32) céramiques pour conduire à un élément composite pré-formé (86) ; puis
- deuxième compression, dans un moule (92, 94), de l'élément composite pré-formé.

8. Pièce d'équipement (10) de véhicule automobile issue d'un procédé de fabrication selon l'une des revendications précédentes, comprenant un premier (12) et un deuxième (16) corps composites ; et un écarteur (18) pris en sandwich entre les premier et deuxième corps composites ;
ledit premier corps composite comprenant : une première couche composite principale (22) ; et une première couche composite de renfort (24), disposée entre la couche composite principale et l'écarteur ;
la première couche composite principale (22) comportant une pluralité de premières fibres céramiques (32) et la première couche composite de renfort comportant une pluralité de deuxièmes fibres (40) unidirectionnelles.

9. Pièce d'équipement (10) de véhicule automobile selon la revendication 8, dans laquelle chacun des premier (36) et deuxième (44) polymères thermofusibles est un polymère thermoplastique, préférentiellement un polypropylène.

10. Pièce d'équipement (10) de véhicule automobile selon la revendication 8 ou 9, issue d'un procédé de fabrication selon la revendication 4, dans laquelle le troisième polymère (36) thermofusible est préférentiellement un polymère thermoplastique, plus préférentiellement un polypropylène.

## Patentansprüche

1. Herstellungsverfahren eines Kraftfahrzeug-Ausrüstungsteils (10), insbesondere eines Kraftfahrzeugs, umfassend die folgenden Schritte:
- Bilden eines Stapels (60), umfassend: eine erste (62) und eine zweite (64) Basislage; und einen Abstandhalter (18), der zwischen der ersten und der zweiten Basislage angeordnet ist;
wobei mindestens die erste Basislage erste Keramikfasern (32) und mindestens ein erstes heißschmelzendes Polymer (36) umfasst; wobei die ersten Fasern (32) eine durchschnittliche Länge von weniger als 150 mm aufweisen;
- Erhitzen und Komprimieren des Stapels (60), um das erste heißschmelzende Polymer (36) zu schmelzen;
wobei
der Stapel ferner eine erste Verstärkungslage (66) umfasst, die zwischen der ersten Basislage (62) und dem Abstandhalter (18) angeordnet ist, wobei die erste Verstärkungslage unidirektionale, im Wesentlichen zueinander parallele zweite Fasern (40) und mindestens ein zweites heißschmelzendes Polymer (44) umfasst; wobei die zweiten Fasern (40) eine mittlere Länge aufweisen, die größer ist als die mittlere Länge der ersten Keramikfasern (32); wobei die erste Verstärkungslage eine flächenbezogene Masse zwischen 200 g/m² und 500 g/m² aufweist.

2. Herstellungsverfahren nach Anspruch 1, wobei die erste Basislage ein Flächengewicht zwischen 600 g/m² und 1000 g/m² aufweist.

3. Herstellungsverfahren nach Anspruch 1 oder 2, wobei die zweiten unidirektionalen Fasern (40) ausgewählt sind aus Keramikfasern, wie beispielsweise Glasfasern, und Naturfasern, wie beispielsweise Flachsfasern.

4. Herstellungsverfahren nach einem der vorherigen Ansprüche, wobei die zweite Basislage (64) dritte Keramikfasern (32) und mindestens ein drittes wärmeschmelzbares Polymer (36) umfasst; wobei die zweite Basislage vorzugsweise eine flächenbezogene Masse zwischen 600 g/m² und 1000 g/m² aufweist.

5. Herstellungsverfahren nach einem der vorherigen Ansprüche, wobei der Stapel ferner eine zweite Verstärkungslage (68) umfasst, die zwischen der zweiten Basislage (64) und dem Abstandhalter (18) angeordnet ist, wobei die zweite Verstärkungslage vierte unidirektionale Fasern (40), die im Wesentlichen parallel zueinander verlaufen, und mindestens ein viertes heißschmelzendes Polymer (44) umfasst; wobei die zweite Verstärkungslage eine flächenbezogene Masse zwischen 200 g/m² und 500 g/m² aufweist.

6. Herstellungsverfahren nach einem der vorherigen Ansprüche, wobei der Stapel ferner mindestens eine erste Lage (74) aus nicht gewebtem Material umfasst, die zwischen der ersten Verstärkungslage (66) und dem Abstandhalter angeordnet ist, wobei die erste Lage aus mindestens einem fünften, heißschmelzenden Polymer (46) gebildet ist.

7. Herstellungsverfahren nach einem der vorherigen Ansprüche, wobei der Schritt des Erwärmens und Verdichtens des Stapels die folgenden zwei Teilschritte umfasst:
- Erhitzen und erstes Pressen des Stapels (60) gegen einen Träger (82, 84), um mindestens das erste wärmeschmelzbare Polymer (36) zu schmelzen und das geschmolzene Polymer an den ersten Keramikfasern (32) anhaften zu lassen, um zu einem vorgeformten Verbundelement (86) zu führen; und dann
- zweites Pressen, in einer Form (92, 94), des vorgeformten Verbundelements.

8. Kraftfahrzeug-Ausrüstungsteil (10), das aus einem Herstellungsverfahren nach einem der vorherigen Ansprüche hervorgeht, mit einem ersten (12) und einem zweiten (16) Verbundkörper; und einem Abstandhalter (18), der zwischen dem ersten und dem zweiten Verbundkörper sandwichartig angeordnet ist;
der erste Verbundkörper umfassend: eine erste Hauptverbundschicht (22); und eine erste Verstärkungsverbundschicht (24), die zwischen der Hauptverbundschicht und dem Abstandhalter angeordnet ist;
die erste Hauptverbundschicht (22) umfassend eine Vielzahl von ersten Keramikfasern (32) und die erste Verstärkungsverbundschicht umfassend eine Vielzahl von zweiten unidirektionalen Fasern (40).

9. Kraftfahrzeug-Ausrüstungsteil (10) nach Anspruch 8, wobei jedes der ersten (36) und zweiten (44) Heißschmelzpolymere ein thermoplastisches Polymer, vorzugsweise Polypropylen, ist.

10. Kraftfahrzeug-Ausrüstungsteil (10) nach Anspruch 8 oder 9, das aus einem Herstellungsverfahren nach Anspruch 4 stammt, wobei das dritte Heißschmelzpolymer (36) vorzugsweise ein thermoplastisches Polymer, besonders bevorzugt ein Polypropylen, ist.

## Claims

1. A method for manufacturing a motor vehicle equipment part (10), comprising the following steps:
- forming a stack (60) comprising: first (62) and second (64) base plies; and a spacer (18) disposed between said first and second base plies;
at least the first base ply comprising first ceramic fibres (32) and at least one first fusible polymer (36); the first fibres (32) having an average length of less than 150 mm;
- heating and compressing the stack (60) so as to melt the first fusible polymer (36);
wherein
the stack further comprises a first reinforcing ply (66), arranged between the first base ply (62) and the spacer (18), said first reinforcing ply comprising unidirectional second fibres (40), substantially parallel to each other, and at least one second fusible polymer (44); said second fibres (40) having an average length greater than the average length of the first ceramic fibres (32); said first reinforcing ply having a weight per unit area of between 200 g/m² and 500 g/m².

2. A manufacturing method according to claim 1, wherein the first base ply has a weight per unit area of between 600 g/m² and 1000 g/m².

3. The manufacturing method according to claim 1 or 2, wherein the second unidirectional fibres (40) are chosen from ceramic fibres, such as glass fibres, and natural fibres, such as flax fibres.

4. The manufacturing method according to one of the preceding claims, wherein the second base ply (64) comprises third ceramic fibres (32) and at least one third fusible polymer (36); said second base ply preferably having a mass per unit area of between 600 g/m² and 1000 g/m².

5. The manufacturing method according to one of the preceding claims, wherein the stack further comprises a second reinforcing ply (68) disposed between the second base ply (64) and the spacer (18), said second reinforcing ply comprising fourth unidirectional fibres (40) substantially parallel to each other and at least one fourth fusible polymer (44); said second reinforcing ply having a mass per unit area of between 200 g/m² and 500 g/m².

6. The manufacturing method according to one of the preceding claims, wherein the stack further comprises at least one first layer (74) of non-woven material disposed between the first reinforcing ply (66) and the spacer, said first layer being formed of at least a fifth fusible polymer (46).

7. The manufacturing method according to any of the preceding claims, wherein the step of heating and compressing the stack comprises the following two sub-steps:
- heating and first compression of the stack (60) against a support (82, 84), so as to melt at least the first fusible polymer (36) and cause said molten polymer to adhere to the first ceramic fibres (32) to produce a pre-formed composite element (86); then
- second compression of the preformed composite element in a mould (92, 94).

8. A motor vehicle equipment part (10) resulting from a manufacturing method according to one of the preceding claims, comprising a first (12) and a second (16) composite body; and a spacer (18) sandwiched between the first and second composite bodies;
said first composite body comprising: a first main composite layer (22); and a first reinforcing composite layer (24) disposed between the main composite layer and the spacer;
the first main composite layer (22) comprising a plurality of first ceramic fibres (32) and the first reinforcing composite layer comprising a plurality of second unidirectional fibres (40).

9. The motor vehicle equipment part (10) according to claim 8, wherein each of the first (36) and second (44) fusible polymers is a thermoplastic polymer, preferably a polypropylene.

10. The motor vehicle equipment part (10) according to claim 8 or 9, resulting from a manufacturing method according to claim 4, wherein the third fusible polymer (36) is preferably a thermoplastic polymer, more preferably a polypropylene.
